(19) 【Europäisches Patentamt / European Patent Office / Office européen des brevets】

(11) **EP 4 606 453 A1**

(12) **EUROPEAN PATENT APPLICATION**
published in accordance with Art. 153(4) EPC

(43) Date of publication:
**27.08.2025 Bulletin 2025/35**

(21) Application number: **23879854.0**

(22) Date of filing: **19.10.2023**

(51) International Patent Classification (IPC):
**B01D 39/16** *(2006.01)* **B03C 3/28** *(2006.01)*

(52) Cooperative Patent Classification (CPC):
**B01D 39/16; B03C 3/28**

(86) International application number:
**PCT/JP2023/037818**

(87) International publication number:
**WO 2024/085211 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.10.2022 JP 2022169192**

(71) Applicant: **TOYOBO MC Corporation
Osaka 530-0001 (JP)**

(72) Inventors:
• **SAKAGUCHI, Keiko**
**Otsu-shi, Shiga 520-0292 (JP)**
• **MASUMORI, Tadao**
**Otsu-shi, Shiga 520-0292 (JP)**

(74) Representative: **Vossius & Partner
Patentanwälte Rechtsanwälte mbB
Siebertstrasse 3
81675 München (DE)**

(54) **FILTRATION MATERIAL AND FILTER**

(57) An object of the present invention is to provide a filter material and a filter that exhibit both high collection efficiency and low pressure loss, as well as high elongation. A filter material comprising a fiber sheet composed of fibers containing a plurality of polyolefin resins having different melt flow rates (MFRs), wherein a sum of a tensile elongation in a MD direction and a tensile elongation in a TD direction of the fiber sheet is 100% or more, and
wherein a quality factor value calculated by the following equation is 1.8 or more:

Quality factor value = -Ln ((100 - Collection efficiency [%]) / 100) / Pressure loss [mmAq]

EP 4 606 453 A1

**Description**

TECHNICAL FIELD

The present invention relates to a filter material and a filter using the same.

BACKGROUND ART

Conventionally, nonwoven fabrics have been widely used as a filter material for air filters. Among them, meltblown nonwoven fabrics have been used for applications such as filter materials for air filters and battery separators (for example, Patent Document 1).

The meltblowing process, a method for manufacturing meltblown nonwoven fabrics, generally involves extruding a thermoplastic polymer through a spinneret, followed by attenuating the extruded polymer into fibers using a jet of hot air. The resulting fibers are then formed into a fiber web by utilizing their self-bonding properties.

Compared to other nonwoven fabric manufacturing methods, such as the spunbond process, the meltblowing process offers the advantages of requiring fewer complex steps and the ability to easily produce fine fibers with diameters ranging from several tens of micrometers down to a few micrometers or less.

However, the meltblowing process is generally carried out using a resin with a relatively low molecular weight and a relatively high melt flow rate. Furthermore, the fibers produced by the meltblowing process are relatively unoriented. Consequently, the elastic stress of the fibers is relatively low, resulting in a nonwoven fabric with correspondingly low strength, making it difficult to achieve satisfactory performance.

Accordingly, Patent Document 2 proposes imparting stretchability to a meltblown nonwoven fabric by using a composition comprising an ethylene-α-olefin copolymer and a styrene-ethylene/butylene-styrene block copolymer. Patent Document 3 discloses a nonwoven fabric having excellent flexibility and stretchability produced by embossing. However, the meltblown nonwoven fabrics disclosed in Patent Documents 2 and 3 lack sufficient performance for use as filter materials or filters.

On the other hand, the performance required of air filters includes high particle collection efficiency for capturing a large amount of microscopic dust and low ventilation resistance, which means minimal resistance to gas flow through the air filter. To obtain a filter material with high particle collection efficiency, it is desirable for the single fibers constituting the nonwoven fabric to have a fine denier. However, when the single fibers are made with a finer denier, the resulting nonwoven fabric becomes more susceptible to collapse, and the ventilation resistance increases due to the increased fiber density of the nonwoven fabric.

To obtain a filter material with low ventilation resistance, it is desirable for the single fibers constituting the nonwoven fabric forming the filter material to have a large fiber denier. However, when the single fibers are made with a larger fiber denier, the surface area of the fibers within the nonwoven fabric decreases, leading to a decrease in particle collection efficiency. Thus, high particle collection efficiency and low ventilation resistance are conflicting performance requirements for air filters.

Therefore, attempts have been made to simultaneously achieve both high particle collection efficiency and low ventilation resistance by electretizing the nonwoven fabric, thereby utilizing electrostatic forces in addition to physical mechanisms for particle capture.

CITATION LIST

PATENT DOCUMENTS

Patent Document 1: JP 2017-94250 A
Patent Document 2: JP H9-105056 A
Patent Document 3: JP 2000-8259 A

SUMMARY OF THE INVENTION

PROBLEMS TO BE SOLVED BY THE INVENTION

As described above, conventional meltblown nonwoven fabrics used as filter materials or filters have low elastic stress of the fibers. Consequently, if the conventional meltblown nonwoven fabrics have insufficient elasticity, i.e., insufficient elongation, there is a problem that the application of external forces, such as during pleating, can readily lead to complete and immediate breakage of the nonwoven fabrics.

Therefore, the present invention has been made in view of the above problems. An object of the present invention is to provide a filter material and a filter that exhibit both high collection efficiency and low pressure loss, as well as high elongation.

Another object is to provide a filter material and a filter that are preferably flexible and have high elongation.

SOLUTIONS TO THE PROBLEMS

The present inventors have conducted extensive studies to solve the above problems and have arrived at the present invention. The filter material and the filter of the present invention are as follows.

[1] A filter material comprising a fiber sheet composed of fibers containing a plurality of polyolefin resins having different melt flow rates (MFRs),

wherein a sum of a tensile elongation in a MD direction and a tensile elongation in a TD direction of the fiber sheet is 100% or more, and
wherein a quality factor value calculated by the following equation is 1.8 or more:

$$\text{Quality factor value} = -\text{Ln} \left( (100 - \text{Collection efficiency [\%]}) / 100 \right) / \text{Pressure loss [mmAq]}$$

[2] The filter material according to [1], wherein the highest MFR value among the plurality of polyolefin resins is at least 10 times greater than the lowest MFR value.
[3] The filter material according to [1] or [2], wherein the filter material is an electret filter material that has undergone electret treatment.
[4] The filter material according to any one of [1] to [3], wherein the fiber sheet consists of a meltblown nonwoven fabric.
[5] The filter material according to any one of [1] to [4], wherein an average fiber diameter of the fibers constituting the fiber sheet is in a range of 5 $\mu$m to 40 $\mu$m.
[6] The filter material according to any one of [1] to [5], wherein the fibers comprise from 0.01 parts by weight to 3 parts by weight of a hindered amine based additive and from 0.025 parts by weight to 0.25 parts by weight of magnesium stearate, relative to 100 parts by weight of the plurality of polyolefin resins.
[7] A filter comprising the filter material according to any one of [1] to [6].

EFFECTS OF THE INVENTION

According to the present invention, it is possible to provide a filter material and a filter exhibiting both high collection efficiency and low pressure loss, as well as high elongation.

Therefore, the filter material of the present invention, due to its high elongation, is resistant to breakage even when subjected to external forces during processing, such as pleating. This property makes it possible to provide thin filters and filter units having high fine dust collection performance, as well as filters and filter units used in combination with adsorbents such as activated carbon.

DESCRIPTION OF EMBODIMENTS

The filter material of the present invention comprises a fiber sheet composed of fibers that contain a plurality of polyolefin resins having different melt flow rates (MFRs). Preferably, the filter material consists of a fiber sheet composed of fibers that comprise a plurality of polyolefin resins having different melt flow rates. The filter material of the present invention has a combined tensile elongation in the MD direction (machine direction) and the TD direction (transverse direction) of 100% or more, preferably 130% or more, and more preferably 150% or more.

When the sum of the tensile elongation in the MD direction and the TD direction (TD) of the filter material is 100% or more, the filter material is less likely to tear when subjected to a process such as pleating (hereinafter sometimes referred to as "forming"). Furthermore, when a laminate of the filter material and other materials, such as an adsorbent or a reinforcing material, is subjected to forming, a total tensile elongation of 100% or more enhances the adhesion between the filter material and the adsorbent or reinforcing material. As a result, tearing of the adsorbent or the filter material and delamination between the filter material and the adsorbent or reinforcing material can be effectively prevented even under stress applied during forming or handling. In contrast, if the sum of the tensile elongations in the MD direction and TD direction is less than 100%, the filter material may break during forming or handling.

The lower limit of the tensile elongation in both the MD direction and the TD direction is preferably 10% or more, more preferably 30% or more, and even more preferably 50% or more. To achieve the desired tensile elongation in the MD direction and the TD direction, the manufacturing conditions may be adjusted. For example, it is preferable to adjust the fiber orientation and/or the degree of mutual fiber fusion. Specifically, this can be accomplished by adjusting parameters such as conveying speed, conveyor angle, collection distance, discharge rate, nozzle pitch, resin temperature, and hot air flow rate.

Quality Factor QF

The quality factor (QF) represents the relationship between collection efficiency and pressure loss.

The filter material of the present invention has a quality factor value of 1.8 or greater, preferably 2.0 or greater, more preferably 2.3 or greater, and even more preferably 2.5 or greater.

A higher quality factor value indicates higher collection efficiency and lower pressure loss, and thus indicates superior performance as a filter material. A filter material with a quality factor value of less than 1.8 may exhibit problems such as excessively low collection efficiency or excessively high pressure loss.

The quality factor value is calculated from the following equation, using the collection efficiency [%] for atmospheric dust particles with a particle diameter of 0.3 $\mu$m and the pressure loss (mmAq) at a linear velocity through the filter of 10.4 cm/s (detailed conditions are based on the examples).

$$\text{Quality Factor QF} = -\text{Ln}\left((100 - \text{Collection Efficiency})/100\right) / \text{Pressure Loss}$$

The collection efficiency is preferably 30% or greater, more preferably 40% or greater, and even more preferably 50% or greater. Since a higher collection efficiency is desirable, no upper limit is specified.

The pressure loss is preferably in the range of 0.2 to 20 mmAq, and more preferably 0.5 to 10 mmAq.

The filter material of the present invention comprises a fiber sheet composed of fibers containing a plurality of polyolefin resins having different melt flow rates (MFRs).

The polyolefin resins may be, for example, polypropylene resins or polyethylene resins. The polypropylene resins may be, for example, propylene homopolymers or copolymers of propylene with one or more $\alpha$-olefins. The polyethylene resins may be, for example, ethylene homopolymers or copolymers of ethylene with one or more $\alpha$-olefins.

The combination of the plurality of polyolefin resins is not particularly limited as long as the resins have different MFRs, and may be, for example, a combination of a plurality of polypropylene resins, a combination of a plurality of polyethylene resins, or a combination of one or more polyethylene resins with one or more polypropylene resins. These polyolefin resins may be homopolymers, copolymers, or a combination thereof.

Among these materials, a polyolefin resin comprising polypropylene as the main component is preferred from the viewpoint of exhibiting electret performance (for example, the polypropylene resin content (total of homopolymer and copolymer) is preferably 50% by mass or more, more preferably 60% by mass or more, still more preferably 75% by mass or more, particularly preferably 90% by mass or more, and 100% by mass or less, based on 100% by mass of the polyolefin resin). Other components may be copolymerized without affecting the polymer properties. More preferably, it is a plurality of polypropylene resins having different melt flow rates.

The fibers of the present invention may also contain, in addition to a plurality of polyolefin resins having different melt flow rates (MFRs), other polyolefin resins, such as polyethylene, polymethylpentene, polystyrene, or cyclic olefins, as well as various copolymerized olefin resins, thermoplastic elastomers, and non-polyolefin based resins.

When using a resin composition containing other resins, these other resins may be included to the extent that they do not impair the properties of the polymer. The content of the other resins is preferably 25% by mass or less, more preferably 10% by mass or less, based on 100% by mass of the resin composition. In the present invention, it is also preferable that the fibers do not contain such other resins, but rather consist essentially of the aforementioned polyolefin resins having different melt flow rates. More preferably, the fibers consist essentially of a plurality of polypropylene resin having different melt flow rates.

In the present invention, a plurality of polyolefin resins having different MFRs may be blended in any desired ratio. However, the ratio of the maximum (highest) MFR value to the minimum (lowest) MFR value is preferably 10 times or more, more preferably 20 times or more, still more preferably 50 times or more, and most preferably 70 times or more. For example, among the plurality of polyolefin resins having different MFRs used in the filter material of the present invention, if the lowest MFR value is 18 and the highest MFR value is 1300, the ratio of the highest to the lowest MFR value is at least 72 times. This ratio may be expressed, for example, as 18:1300.

As a result of studies conducted by the present inventors, it was found that blending a plurality of polyolefin resins having different MFRs improves flexibility due to the presence of high molecular weight components. While a higher MFR value improves melt flowability and processability, it tends to reduce tensile strength. Therefore, in the present invention, tensile strength is improved by blending a resin having a low MFR, which corresponds to a high molecular weight.

To achieve the above effects, the minimum MFR value is preferably 1 or more, more preferably 5 or more, and still more preferably 10 or more, and is preferably 1500 or less, more preferably 1000 or less, and still more preferably 500 or less. The maximum MFR value is preferably 100 or more, more preferably 200 or more, and still more preferably 300 or more, and is preferably 3500 or less, more preferably 2500 or less, and still more preferably 2000 or less.

In the polyolefin resin (100% by mass), the proportion of the polyolefin resin (preferably a polypropylene resin) having the minimum MFR value is preferably from 0.5 to 80% by mass, more preferably from 1 to 50% by mass. Further, the proportion of the polyolefin resin (preferably a polypropylene resin) having the maximum MFR value is preferably from 20 to 99.5% by mass, more preferably from 50 to 99% by mass.

The mass ratio of the polyolefin resin (preferably a polypropylene resin) having the minimum MFR value to the polyolefin resin (preferably a polypropylene resin) having the maximum MFR value is preferably from 0.5:99.5 to 80:20, more preferably from 1:99 to 50:50.

The filter material of the present invention exhibits excellent thermal stability. Although the filter material may be exposed to high temperatures during forming processes such as during the production of filters or during use, the filter material of the present invention maintains a high Quality Factor value QF even after heating. The ratio of the Quality Factor value QF after heating to the Quality Factor value QF before heating (QF after heating/QF before heating) is preferably 0.75 or more, more preferably 0.8 or more, and still more preferably 0.85 or more.

In producing the fibers for the filter material of the present invention, which contain a plurality of polyolefin resins having different melt flow rates (MFRs), it is necessary to select polyolefin resins such that the ratio of the highest MFR value to the lowest MFR value satisfies the above-mentioned predetermined ratio, and preferably polyolefin resins that satisfy the above-mentioned ranges of the maximum and minimum MFR values. It is also preferable to adjust the mixing ratio and other parameters so that each polyolefin resin having the lowest and highest MFR values are present in the aforementioned preferred proportions. The additives described below may be contained in the polyolefin resin in advance or may be added when the plurality of polyolefin resins are melted and mixed.

The temperature for mixing the plurality of polyolefin resins (mixing temperature) is preferably a temperature about 5°C to 250°C higher than the melting point of the polyolefin resin having the highest melting point. On the other hand, if the mixing temperature is excessively high, the molecular weight of the polyolefin resin may be reduced, resulting in a decrease in the strength of the filter material. Therefore, the mixing temperature is preferably 450°C or less, more preferably 400°C or less. The mixing time may be appropriately adjusted to achieve uniform mixing, and may be, for example, typically from about 1 to 30 minutes. Furthermore, various known melt-kneading machines such as extruders, mixers, kneaders, and mixing rolls can be used for the mixing operation.

The filter material of the present invention may contain conventional additives such as antioxidants, weathering stabilizers, light stabilizers, antistatic agents, anti-fogging agents, antiblocking agents, lubricants, nucleating agents, and pigments, as well as other polymers, as long as these do not detract from the effects of the present invention. Furthermore, the filter material of the present invention may optionally contain additives such as heat stabilizers, weathering agents, and polymerization inhibitors. These additives may be added during the production of the polyolefin resin or may be added after processing into a fiber sheet or a filter material.

It is also a preferred embodiment that the filter material of the present invention is an electret filter material that has undergone electret treatment.

Electret treatment imparts an electrostatic charge to the filter medium, thereby improving collection efficiency and enabling the production of a higher-performance filter material.

For the electret treatment of the present invention, known techniques such as corona charging, frictional charging, thermal electret method, electron beam irradiation method, charged particle injection method, high-pressure liquid flow irradiation method, and photoelectret method can be employed.

It is also a preferred embodiment that the filter material of the present invention contains a hindered amine based compound.

Particularly, when the filter material of the present invention is an electret filter material, containing a hindered amine based compound results in better chargeability and charge retention properties during electret treatment.

Compared to a filter material without containing a hindered amine based compound, an electret filter material containing a hindered amine based compound exhibits superior collection performance because it is less likely to lose charge even when in contact with water.

Examples of the hindered amine based compound include poly[{(6-(1,1,3,3-tetramethylbutyl)imino-1,3,5-triazine-2,4-diyl)}{(2,2,6,6-tetramethyl-4-piperidyl)imino}hexamethylene{(2,2,6,6-tetramethyl-4-piperidyl)imino}], dimethyl succinate-1-(2-hydroxyethyl)-4-hydroxy-2,2,6,6-tetramethylpiperidine polycondensate, and bis(1,2,2,6,6-pentamethyl-4-piperidyl) 2-(3,5-di-tert-butyl-4-hydroxybenzyl)-2-n-butylmalonate. These may be used alone or in combination of two or more.

The content of the hindered amine based compound is preferably from 0.01 parts by mass to 3 parts by mass, based on 100 parts by mass of the resin constituting the fibers of the fiber sheet that forms the filter material. The lower limit is more preferably 0.2 parts by mass or more, still more preferably 0.3 parts by mass or more, even more preferably 0.5 parts by mass or more, and the upper limit is more preferably 2.5 parts by mass or less. The upper and lower limits may be arbitrarily combined.

It is also a preferred embodiment that the filter material of the present invention contains magnesium stearate. Particularly, when the filter material of the present invention is an electret filter material, the inclusion of magnesium stearate improves the thermal stability of the retained electrostatic charge of the electret filter material.

The content of magnesium stearate is preferably 0.025 parts by mass to 0.25 parts by mass, based on 100 parts by mass of the resin constituting the fibers of the fiber sheet that constitutes the filter material; the lower limit is more preferably 0.02 parts by mass or more, still more preferably 0.07 parts by mass or more, and the upper limit is more preferably 0.15 parts by mass or less. The upper and lower limits may be arbitrarily combined.

In the present invention, the combined use of magnesium stearate and hindered amine based compounds is also a preferred embodiment from the viewpoint of improving the collection efficiency and thermal stability of the electret filter material.

It is desirable that magnesium stearate and the hindered amine based compound be added to the polyolefin resin in the aforementioned contents.

It is also a preferred embodiment that the filter material of the present invention contains a suitable thermal stabilizer. By including a thermal stabilizer, the thermal stability during spinning can be enhanced. Examples of the thermal stabilizer include nitrogen-containing hindered phenolic compound, metal salt hindered phenolic compounds, phenolic compounds, sulfur-based compounds, and phosphorus-based compounds, and these may be used alone or in combination of two or more. The content of the thermal stabilizer is preferably 0.01 to 5% by mass .

It is also a preferred embodiment that the filter material of the present invention contains various known additives.

Examples of such additives include known additives that impart, for example, one or more of the effects listed below to the filter material. These effects include, but are not limited to, for example, dust removal, deodorization, antibacterial properties, antifungal properties, antiviral properties, insect repellent properties, insecticidal properties, pest repellent properties, harmful substance removal, fragrance, dehumidification, humidity control, moisture absorption (drying), moisture (humidity) permeation, adsorption of oil and the like, adjustment of ion balance such as cation adsorption, and evaporation or sustained release of water or volatile drugs or the like. The additive(s) may be used alone or in combination of two or more. The additive may be incorporated into the resin or may be applied to the fiber sheet or the filter material by spraying or other suitable methods. The content of the additive(s) is preferably 10% or less by mass.

The form of the fiber sheet used in the filter material of the present invention includes, for example, nonwoven fabric, woven fabric, knitted fabric, and paper-like material. Among these, a nonwoven fabric is preferred, and meltblown nonwoven fabric is particularly preferred. The fiber sheet may be manufactured by any known method. Furthermore, the fiber sheet may be either a homogeneous material produced using a single manufacturing method and a single material or a mixture of two or more types of fibers having different manufacturing methods, materials, or fiber diameters.

In the present invention, it is also a preferred embodiment that the basis weight of the fiber sheet and/or the fiber diameter of the fibers falls within a predetermined range. If the basis weight of the nonwoven fabric is too low, the collection efficiency decreases. Conversely, if the basis weight is too high, clogging tends to occur. For example, the basis weight of the meltblown nonwoven fabric is preferably 5 to 100 $g/m^2$, and more preferably 10 to 60 $g/m^2$.

If the fiber diameter of the fibers constituting the fiber sheet is too large, it may be difficult to obtain practical collection efficiency, or, in the case of an electret filter material, the decrease in collection efficiency during charge decay may become significant. On the other hand, if the fiber diameter is too small, it may become necessary to increase the basis weight to achieve sufficient collection efficiency, which could result in a significant pressure loss or make it impossible to impart a sufficient electrostatic charge during electret treatment.

For example, the average fiber diameter of the fibers constituting the meltblown nonwoven fabric is preferably 1 to 30 $\mu$m, and more preferably 5 to 20 $\mu$m.

Either the basis weight or the fiber diameter of the meltblown nonwoven fabric may be within a predetermined range; however, it is desirable that both be within predetermined ranges in consideration of collection efficiency and pressure loss.

It is also a preferred embodiment that the filter material of the present invention is used as a filter consisting solely of the filter material, or as a filter in combination with other materials.

The shape of the filter is not particularly limited and may be a filter subjected to various processes such as pleating, corrugation, and three-dimensional molding, or a sheet-like filter that has not been subjected to these processes. In particular, filters subjected to wave-like processing such as pleating and corrugation, or three-dimensional molding are preferable because they can contribute to increasing the surface area of the filter material, reducing pressure loss, improving collection efficiency, and extending the service life.

Furthermore, compared to sheet-like filters, filters subjected to wave-like processing or three-dimensional molding are preferable because they have higher shape retention during use and are also excellent in handling properties during attachment and detachment of the filter. For example, when pleating is performed using the fiber sheet of the present invention, uniform pleats can be formed without tearing the fiber sheet. Although preferred pleating conditions are not particularly limited, the pleating temperature is preferably 60°C to 160°C. If the temperature is higher than 160°C, the electrostatic charge is lost and sufficient performance is not exhibited. If the temperature is lower than 60°C, pleating becomes difficult. More preferably, the temperature is 80°C to 110°C.

Other materials to be combined with the filter material of the present invention are not particularly limited, and a filter may be constructed using various known materials such as a reinforcing material or activated carbon.

As described above, the present invention can provide a flexible filter material with high elongation and a filter with improved processability.

This application claims the benefit of priority based on Japanese Patent Application No. 2022-169192, filed in Japan on October 21, 2022. The entire contents of the specification of Japanese Patent Application No. 2022-169192, filed on October 21, 2022, are incorporated herein by reference.

EXAMPLES

Hereinafter, the present invention will be specifically described with reference to examples. However, the present invention is not limited to the following examples, and appropriate modifications can be made within the scope consistent with the foregoing and following descriptions. These appropriately modified examples are also included in the technical scope of the present invention.

First, the processing conditions, measured characteristic values, and their respective measurement methods used in Examples and Comparative Examples are shown below.

[Processing Conditions]

(Electret Treatment)

The nonwoven fabrics (fiber sheets) obtained in the Examples and Comparative Examples were each placed on a mesh support (96 mesh) with an air permeability of 120 $cm^3/cm^2/s$ and subjected to a water jet treatment using an aqueous solution at a pressure of 1 MPa from a nozzle located 2 cm above the nonwoven fabric, the nozzle having a diameter of 0.1 mm and a pitch of 0.6 mm. The aqueous solution used was high-purity water obtained by subjecting ordinary tap water to reverse osmosis membrane treatment followed by ion exchange membrane treatment. The conveying speed of the mesh support was set to 4 m/min, and the region immediately below the mesh support directly under the nozzle was maintained at a reduced pressure of 2 mAq. This treatment was performed twice on each of the front and back sides of the nonwoven fabric. In this manner, electret treatment was performed to obtain an electret filter material.

[Measurement Methods]

(Filtration Properties)

Filter Material Quality Factor QF

The quality factor QF (1/mmAq) was calculated from the following formula, based on the pressure loss PD (mmAq) and particle collection efficiency E ([%]):

$$QF = -\ln\left((100 - E) / 100\right) / PD$$

The pressure loss PD (mmAq) was determined by placing a sample of the electret filter material in a duct, controlling the linear velocity of air passing through the filter material to 10.4 cm/s. The static pressure difference between the upstream side (air pressure before passing through the filter) and the downstream side (air pressure after passing through the filter) (=static pressure on the upstream side - static pressure on the downstream side) of the filter material was determined by reading using a micro differential pressure gauge.

The particle collection efficiency E (%) (= 1 - [mass of dust particles collected by the filter / mass of dust particles supplied] $\times$ 100%) was determined using a filter tester under the conditions of an air flow rate of 10.4 cm/s, using atmospheric dust particles ranging from 0.3 to 0.5 $\mu$m in size.

(Average Fiber Diameter)

For the nonwoven fabrics obtained in the Examples and Comparative Examples, 10 small piece samples were randomly collected from each sheet. Photographs of each sample were taken at magnifications ranging from 500x to 3000x using a scanning electron microscope. From these photographs, 10 fibers were selected randomly from each sample, resulting in a total of 100 fibers. The fiber diameters were measured, and the average fiber diameter was calculated, with the value rounded off to the nearest whole number.

(Basis Weight (g/m²))

In accordance with JIS L 1906, section 5.2 (2000 edition), three samples measuring 50 cm in length × 50 cm in width were collected for each of the nonwoven fabrics obtained in Examples and Comparative Examples, and the weight of each sample was measured. The average of these weights was then calculated and converted to basis weight per unit area (g/m²). The result was rounded off to the nearest whole number.

(Processability)

Activated carbon particles (average particle size: 500 $\mu$m; 250 g/m²) and polyethylene powder (average particle size: 20 $\mu$m) were sprayed onto a reinforcing material made of PET thermal bond nonwoven fabric (80 g/m²). An electret filter material was then laminated on top of this layer, the resulting laminate was held in a constant-temperature oven at 130°C for one minute to produce an activated carbon sheet.
The activated carbon sheet was then pleated using a reciprocating pleating machine at a pleating temperature of 110°C with a pleat height of 3.0 cm. The processed sheet was evaluated according to the following criteria:

Good($\circ$): The pleats are uniform, and there are no processing issues.
Slightly poor ($\triangle$): The pleats are slightly non-uniform.
Poor ($\times$): The pleats are non-uniform, resulting in processing issues, or the nonwoven fabric has torn.

(Tensile Elongation)

In accordance with JIS L 1906, section 5.3.1 (2000 edition), a sample measuring 5 cm in width × 20 cm in length was prepared from the electret filter material. The sample was then mounted vertically on the testing machine with a grip distance of 15 cm. Tensile tests were performed three times each in both the machine direction (MD) and transverse direction (TD) at a tensile speed of 20 cm/min. Elongation [%] at break was calculated from the displacement measured at the point of sample rupture. The reported tensile elongation is the average value of three measurements (n = 3).

(Thermal Stability)

Thermal stability was evaluated by determining the ratio of the quality factor QF value before and after placing an electret filter material (size: 10 cm × 10 cm) in an oven, preheated and maintained at 100°C, for 30 minutes (quality factor QF after placement / quality factor QF before placement).

(Melt Flow Rate)

The melt flow rate (MFR) was determined in accordance with JIS K 7210:1999 using a Melt Indexer F-01 (manufactured by Toyo Seiki Seisakusho Co., Ltd.) at 230°C under a load of 2.16 kg. The amount of resin extruded from the die over a fixed period was measured and converted to the equivalent amount of resin extruded in 10 minutes. This converted value is the value calculated by the MFR automatic computation process (Method B). The calculation formula is shown below. Even when the melt flow rate exceeded 50 g/10 min, the MFR was calculated using the same method.

$$\text{MFR (g/10 min)} = (427 \times L \times \rho) / t$$

Where:

L (length of the test interval): 3 (cm)
$\rho$ (melt density at the test temperature): The value (g/cm³) calculated using the cut-and-weigh method using the following equation. If the cut-and-weigh method is not applicable, then $\rho$ = 0.75 (g/cm³).

$$\rho = m / (0.711 \times L)$$

Where:

m: Mass (g) of the sample extruded when the piston moves through the above test interval L, measured by the cut-and-weigh method.

L: Same as the interval as defined above.

t (interval travel time): Actual measured value (s).

[Example 1]

A masterbatch D was prepared by blending 100 parts by weight of polypropylene resin B (MFR = 1300) with 4.5 parts by weight of Chimassorb 944 (manufactured by BASF SE), a hindered amine based additive, and 0.34 parts by weight of magnesium stearate, based on 100 parts by weight of the polypropylene resin B.

Polypropylene resin A (MFR = 18) and the masterbatch D were blended at a weight ratio of 5:1. Using this blended resin, a meltblown nonwoven fabric (fiber sheet) having a basis weight of 26 g/m$^2$ and an average fiber diameter of 13 $\mu$m was produced.

The electret filter material obtained by subjecting this nonwoven fabric to electret treatment exhibited a quality factor QF = 2.5, and a combined tensile elongation in the machine direction and the transverse direction was 310%. The thermal stability was 0.9. The pleat processability was evaluated as "Good (∘)". The ratio of the minimum to the maximum MFR values of the resins constituting the fibers was 18:1300.

[Example 2]

Polypropylene resin A (MFR = 18), polypropylene resin B (MFR = 1300), and the masterbatch D prepared in Example 1 were blended at a weight ratio of A:B:D = 2:2:1. Using this blended resin, a meltblown nonwoven fabric having a basis weight of 26 g/m$^2$ and an average fiber diameter of 10 $\mu$m was produced by the same method as in Example 1.

The electret filter material obtained by subjecting this nonwoven fabric to electret treatment exhibited a quality factor QF = 3.1, and a combined tensile elongation in the machine direction and the transverse direction was 140%. The thermal stability was 0.92. The pleat processability was evaluated as "Good (∘)". The ratio of the minimum to the maximum MFR values of the resins constituting the fibers was 18:1300.

[Example 3]

Polypropylene resin C (MFR = 60) and the masterbatch D produced in Example 1 were blended at a weight ratio of C:D = 5:1. Using this blended resin, a meltblown nonwoven fabric having a basis weight of 26 g/m$^2$ and an average fiber diameter of 10 $\mu$m was produced by the same method as in Example 1.

The electret filter material obtained by subjecting this nonwoven fabric to electret treatment exhibited a quality factor QF = 2.3, and a combined tensile elongation in the machine direction and the transverse direction was 280%. The thermal stability was 0.88. The pleat processability was evaluated as "Good (∘)". The ratio of the minimum to the maximum MFR values of the resins constituting the fibers was 60:1300.

[Example 4]

A masterbatch E was prepared by adding 10 parts by weight of an antibacterial agent to 100 parts by weight of polypropylene resin B (MFR = 1300).

Polypropylene resin A (MFR = 18), the masterbatch D produced in Example 1, and the masterbatch E were blended at a weight ratio of A:D: E = 3.8:1:0.06. Using this blended resin, a meltblown nonwoven fabric having a basis weight of 26 g/m$^2$ and an average fiber diameter of 10 $\mu$m was produced by the same method as in Example 1.

The electret filter material obtained by subjecting this nonwoven fabric to electret treatment exhibited a quality factor QF = 2.3, and a combined tensile elongation in the machine direction and the transverse direction was 200%. The thermal stability was 0.9. The pleat processability was evaluated as "Good (∘)". The ratio of the minimum to the maximum MFR values of the resins constituting the fibers was 18:1300.

[Comparative Example 1]

Polypropylene resin B (MFR = 1300) and the masterbatch D prepared in Example 1 were blended at a weight ratio of B:D = 4:1. Using this blended resin, a meltblown nonwoven fabric having a basis weight of 30 g/m$^2$ and an average fiber diameter of 14 $\mu$m was produced by the same method as in Example 1.

The electret filter material obtained by subjecting this nonwoven fabric to electret treatment exhibited a quality factor QF = 1.9, and a combined tensile elongation in the machine direction and the transverse direction was 25%. The thermal stability was 0.86. The pleat processability was evaluated as "Poor (×)". The ratio of the minimum to the maximum MFR values of the resins constituting the fibers was 1300:1300.

[Comparative Example 2]

A masterbatch F was prepared by blending 100 parts by weight of polypropylene resin B (MFR = 1300) with 4.5 parts by weight of Chimassorb 944 (manufactured by BASF SE), a hindered amine based additive, based on 100 parts by weight of the polypropylene resin B.

Polypropylene resin B (MFR = 1300) and the masterbatch F were blended at a weight ratio of B:F = 4:1. Using this blended resin, a meltblown nonwoven fabric having a basis weight of 22 g/m$^2$ and an average fiber diameter of 10 $\mu$m was produced by the same method as in Example 1.

The electret filter material obtained by subjecting this nonwoven fabric to electret treatment exhibited a quality factor QF of 2.0, and a combined tensile elongation in the machine direction and the transverse direction was 30%. The thermal stability was 0.63. The pleat processability was evaluated as "Poor ($\times$)". The ratio of the minimum to the maximum MFR values of the resins constituting the fibers was 1300:1300.

[Comparative Example 3]

Polypropylene resin B (MFR = 1300), polypropylene resin G (MFR = 900), and the masterbatch D prepared in Example 1 were blended at a weight ratio of B:G:D = 2:2:1. Using this blended resin, a meltblown nonwoven fabric having a basis weight of 26 g/m$^2$ and an average fiber diameter of 14 $\mu$m was produced by a conventionally known method.

The electret filter material obtained by subjecting this nonwoven fabric to electret treatment exhibited a quality factor QF = 2.2, and a combined tensile elongation in the machine direction (MD) and the transverse direction (TD) was 48%. The thermal stability was 0.88. The pleat processability was evaluated as "Poor ($\times$)". The ratio of the minimum to the maximum MFR values of the resins constituting the fibers was 900:1300.

[Table 1]

| | | Example 1 | Example2 | Example3 | Example 4 | Comparative Example 1 | Comparative Example 2 | Comparative Example 3 |
|---|---|---|---|---|---|---|---|---|
| Raw Materials (Weight Ratio) | Polypropylene Resin A | 5 | 2 | | 3.8 | | | |
| | Polypropylene Resin B | | 2 | | | 4 | 4 | 2 |
| | Polypropylene Resin C | | | 5 | | | | |
| | Polypropylene Resin G | | | | | | | 2 |
| | Masterbatch D | 1 | 1 | 1 | 1 | 1 | | 1 |
| | Masterbatch E | | | | 0.06 | | | |
| | Masterbatch F | | | | | | 1 | |
| Nonwoven Fabric | Basis Weight(g/m$^2$) | 26 | 26 | 26 | 26 | 30 | 22 | 26 |
| | Average Fiber Diameter($\mu$m) | 13 | 10 | 10 | 10 | 14 | 10 | 14 |
| Electret Filter Medium | Quality Factor QF | 2.5 | 3.1 | 2.3 | 2.3 | 1.9 | 2.0 | 2.2 |
| | Total Tensile Elongation of MD and TD | 310% | 140% | 280% | 200% | 25% | 30% | 48% |
| | Thermal Stability (QF Ratio Before/After Heating) | 0.9 | 0.92 | 0.88 | 0.9 | 0.86 | 0.63 | 0.88 |
| | Pleat Processability | ○ | ○ | ○ | ○ | × | × | × |
| | MFR (Min:Max) | 18:1300 | 18:1300 | 60:1300 | 18:1300 | 1300:1300 | 1300:1300 | 900:1300 |
| | MFR Ratio (Max/Min) | 72 | 72 | 22 | 72 | 1 | 1 | 0.7 |

It can be seen that the electret filter materials of Examples 1 to 4 of the present invention exhibit a higher combined tensile elongation in the machine direction and the transverse direction, as well as superior pleat processability, compared to Comparative Examples 1 to 3. This result clearly indicates that the electret filter materials of Examples 1 to 4 possess high flexibility.

Furthermore, Examples 1 to 4, which contain magnesium stearate, maintained a higher quality factor QF even after heat treatment compared to Comparative Example 2, which did not contain magnesium stearate.

INDUSTRIAL APPLICABILITY

The filter material of the present invention exhibits excellent flexibility and processability, making it suitable for a wide range of filter applications and thus capable of making a significant contribution to industry.

**Claims**

1. A filter material comprising a fiber sheet composed of fibers containing a plurality of polyolefin resins having different melt flow rates (MFRs),

   wherein a sum of a tensile elongation in an MD direction and a tensile elongation in a TD direction of the fiber sheet is 100% or more, and
   wherein a quality factor value calculated by the following equation is 1.8 or more:

   Quality factor value = -Ln ((100 - Collection efficiency [%]) / 100) / Pressure loss [mmAq]

2. The filter material according to claim 1, wherein the highest MFR value among the plurality of polyolefin resins is at least 10 times greater than the lowest MFR value.

3. The filter material according to claim 1 or 2, wherein the filter material is an electret filter material that has undergone electret treatment.

4. The filter material according to claim 1 or 2, wherein the fiber sheet consists of a meltblown nonwoven fabric.

5. The filter material according to claim 1 or 2, wherein an average fiber diameter of the fibers constituting the fiber sheet is in a range of 5 $\mu$m to 40 $\mu$m.

6. The filter material according to claim 1, wherein the fibers comprise from 0.01 parts by weight to 3 parts by weight of a hindered amine based additive and from 0.025 parts by weight to 0.25 parts by weight of magnesium stearate, relative to 100 parts by weight of the plurality of polyolefin resins.

7. A filter comprising the filter material according to claim 1 or 2.

## INTERNATIONAL SEARCH REPORT

| International application No. |
| --- |
| **PCT/JP2023/037818** |

| A. | CLASSIFICATION OF SUBJECT MATTER |
| --- | --- |

*B01D 39/16*(2006.01)i; *B03C 3/28*(2006.01)i
FI:    B01D39/16 A; B03C3/28

According to International Patent Classification (IPC) or to both national classification and IPC

| B. | FIELDS SEARCHED |
| --- | --- |

Minimum documentation searched (classification system followed by classification symbols)

B01D39/00-39/20, B03C3/00-11/00, D04H1/00-18/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2021-188220 A (IDEMITSU KOSAN CO., LTD.) 13 December 2021 (2021-12-13) claim 13, paragraphs [0008]-[0072] | 1-5, 7 |
| Y | | 6 |
| X | WO 2014/142275 A1 (IDEMITSU KOSAN CO., LTD.) 18 September 2014 (2014-09-18) claim 7, paragraphs [0008]-[0061] | 1, 3-5, 7 |
| Y | | 6 |
| X | CN 112870850 A (GUANGDONG KINGFA SCIENTIFIC AND TECHNOLOGICAL CO., LTD.) 01 June 2021 (2021-06-01) claim 9, paragraphs [0003]-[0059] | 1-7 |
| Y | | 6 |
| Y | JP 2022-98993 A (TOYOBO CO., LTD.) 04 July 2022 (2022-07-04) paragraphs [0012], [0023], [0036] | 6 |
| A | JP 2010-522835 A (E.I. DU PONT DE NEMOURS AND CO.) 08 July 2010 (2010-07-08) paragraph [0034] | 1-7 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 December 2023** | **09 January 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/037818**

| Patent document cited in search report | | | Publication date (day/month/year) | Patent family member(s) | Publication date (day/month/year) |
|---|---|---|---|---|---|
| JP | 2021-188220 | A | 13 December 2021 | (Family: none) | |
| WO | 2014/142275 | A1 | 18 September 2014 | US 2016/0023147 A1 claim 7, paragraphs [0020], [-0144] CN 105026015 A EP 2974778 A1 JP 2014-176775 A | |
| CN | 112870850 | A | 01 June 2021 | (Family: none) | |
| JP | 2022-98993 | A | 04 July 2022 | (Family: none) | |
| JP | 2010-522835 | A | 08 July 2010 | US 2008/0242171 A1 paragraph [0048] BR PI0807306 A2 CN 101755081 A CN 102534829 A EP 2129816 A2 EP 2527503 A1 KR 10-2009-0127371 A WO 2008/121338 A2 | |

Form PCT/ISA/210 (patent family annex) (January 2015)

**REFERENCES CITED IN THE DESCRIPTION**

**Patent documents cited in the description**

- JP 2017094250 A
- JP H9105056 A
- JP 2000008259 A
- JP 2022169192 A